# EUROPÄISCHE PATENTANMELDUNG

(11) **EP 1 134 145 A2**
(43) Veröffentlichungstag der Anmeldung: **19.09.2001**
(21) Anmeldenummer: 01103109.3
(22) Anmeldetag: 09.02.2001
(51) Int. Cl.: B62D 5/04, H02P 3/12

(54) **Schutzeinrichtung für eine elektrische Lenkung**

(30) Priorität: 17.03.2000 DE 10013133
(71) Anmelder: Mannesmann VDO Aktiengesellschaft, 60388 Frankfurt am Main (DE)
(72) Erfinder: Schäfert, Arthur, 65843 Sulzbach (DE)
(74) Vertreter: Rassler, Andrea, Dipl.-Phys.

(57) **Zusammenfassung**

Bei einer Schutzeinrichtung für eine elektrische Lenkung eines Kraftfahrzeugs mit einer Bedieneinrichtung, einem Elektromotor, einer Steuerschaltung und einem Getriebe, ist der Elektromotor mit einer Bremsschaltung verbunden, die den Motor mit einer elektrischen Last beaufschlagt, wenn die Drehzahl einen vorgegebenen Wert übersteigt.

## Beschreibung

Die Erfindung betrifft eine Schutzeinrichtung für eine elektrische Lenkung eines Kraftfahrzeugs mit einer Bedieneinrichtung, einem Elektromotor, einer Steuerschaltung und einem Getriebe.

In Werkstätten wird die Lenkung von aufgebockten Kraftfahrzeugen häufig durch Schwenken der Vorderräder verstellt, um beispielsweise die Bewegung des Lenkantriebs zu überprüfen oder durch eine extreme Lenkstellung Zugang zu überprüfenden oder zu reparierenden Teilen zu bekommen. Dabei wird häufig relativ schnell und ungebremst gegen den Lenkanschlag gefahren, sodass durch die ruckartige Abbremsung und die Massenträgheit des Lenkrades und des Lenksystems hohe Beschleunigungsmomente auftreten. Diese sind vor allem durch die hohe Übersetzung zwischen Radwinkel und Lenkradwinkel bedingt. Ferner wird bei elektrischen Servo-Lenkungen der Elektromotor ebenfalls stark beschleunigt, nämlich durch die höhere Getriebeübersetzung auf eine besonders hohe Drehzahl, sodass beim ruckartigen Abbremsen am Anschlag sehr hohe Beschleunigungsmomente das Getriebe zwischen Elektromotor und Lenkung zerstören können.

In den Lastenheften der Fahrzeughersteller ist daher eine hohe maximale Belastbarkeit für das Lenksystem vorgesehen, die weit außerhalb der vom Fahrer normalerweise aufgebrachten Lenkmomente (circa 5 Nm) liegt, sodass das jeweilige Fahrzeug den sogenannten Werkstattmissbrauch-Test besteht, bei dem die Vorderräder voll beschleunigt und ungebremst gegen den Lenkanschlag geschwenkt werden. Deshalb müssen die Kraftübertragungselemente, insbesondere das Getriebe des Lenksystems weit über den normalen Erfordernissen dimensioniert sein. Ein Schutz gegen die hohen Beschleunigungsmomente könnte beispielsweise mit einer Rutschkupplung zwischen der Motormasse und dem Getriebe erzielt werden, was jedoch mit erheblichem technischen Aufwand verbunden ist.

Der Erfindung liegt daher die Aufgabe zugrunde, mit einfachen und preiswerten Mitteln das hohe Bremsmoment beim schnellen Schwenken der Vorderräder gegen den Lenkanschlag zu verringern.

Diese Aufgabe wird erfindungsgemäß dadurch gelöst, dass der Elektromotor mit einer Bremsschaltung verbunden ist, die den Motor mit einer elektrischen Last beaufschlagt, wenn die Drehzahl einen vorgegebenen Wert übersteigt.

Die erfindungsgemäße Schutzeinrichtung ist für sogenannte Servo-Lenkungen bzw. Lenkhilfen geeignet, bei denen die Lenkung an sich über ein herkömmlich mechanisch verbundenes Lenkrad erfolgt und ein Elektromotor derart gesteuert wird, dass er die von Hand ausgeführte Bewegung unterstützt. Außerdem ist die erfindungsgemäße Schutzeinrichtung in vorteilhafter Weise auch für Lenkeinrichtungen geeignet, bei denen keine unmittelbare mechanische Verbindung zwischen der Bedieneinrichtung, beispielsweise dem Lenkrad, und dem Lenkgetriebe vorgesehen ist, sondern lediglich eine elektrische Steuerung des Elektromotors derart, dass die Lenkung den Eingaben über die Bedieneinrichtung folgt (steer-by-wire).

Durch die erfindungsgemäße Schutzeinrichtung wird erzielt, dass die Geschwindigkeit beim Schwenken der Vorderräder begrenzt wird und somit auch die Verzögerung beim Erreichen des Lenkanschlags. Dabei wird bei einer nicht allzu schnellen Schwenkbewegung der dazu erforderliche Kraftaufwand nicht vergrößert. Bei der erfindungsgemäßen Schutzeinrichtung wird der Elektromotor als Generator betrieben und bremst damit die Lenkbewegung.

Damit das Lenkverhalten während des normalen Betriebes des Kraftfahrzeuges in keiner Weise von der erfindungsgemäßen Schutzeinrichtung beeinträchtigt wird, ist gemäß einer Weiterbildung vorgesehen, dass die Bremsschaltung von der Steuerschaltung während des Betriebs des Kraftfahrzeugs abgeschaltet wird.

Eine vorteilhafte Ausgestaltung der erfindungsgemäßen Schutzeinrichtung wird mit äußerst geringem Aufwand dadurch erreicht, dass die Bremsschaltung von einer eingangsseitig mit den Anschlüssen des Elektromotors verbundenen Schwellwertschaltung und mindestens einem von der Schwellwertschaltung ansteuerbaren Halbleiterschalter einer im übrigen zum Antrieb dienenden Endstufe gebildet ist. In Anpassung an die üblichen Endstufen ist dabei vorzugsweise vorgesehen, dass die Last von mindestens zwei Halbleiterschaltern einer Brückenendstufe gebildet ist.

Eine besonders einfache Bremsschaltung wird bei dieser Ausgestaltung insbesondere dadurch erzielt, dass die Schwellwertschaltung aus zwei mit je einem Anschluss des Elektromotors verbundenen Dioden besteht, die gemeinsam an einen Pol einer Z-Diode angeschlossen sind, und dass der andere Pol der Z-Diode mit Steuereingängen der Halbleiterschalter verbunden ist.

Ein Abschalten der Schutzeinrichtung kann bei einer anderen vorteilhaften Ausgestaltung dadurch erreicht werden, dass in Zuleitungen der Schwellwertschaltung zu den Steuerelektroden von der Steuerschaltung steuerbare Schalter angeordnet sind, wobei zur Erhöhung der Sicherheit vorgesehen sein kann, dass ein weiterer steuerbarer Schalter zwischen mindestens einer der Dioden und der Z-Diode angeordnet ist. Vorzugsweise sind dabei die steuerbaren Schalter von einem Relais gebildet.

Die Erfindung lässt zahlreiche Ausführungsformen zu. Eine davon ist schematisch in der Zeichnung anhand mehrerer Figuren dargestellt und nachfolgend beschrieben. Es zeigt:
- Fig. 1:: eine schematische Darstellung eines Lenksystems eines Kraftfahrzeugs mit einer elektrischen Servo-Lenkung,
- Fig. 2:: eine erfindungsgemäße Schutzeinrichtung und Teile einer bekannten Schaltung für eine Servo-Lenkung und
- Fig. 3:: ein detaillierter als Fig. 2 dargestelltes Ausführungsbeispiel.

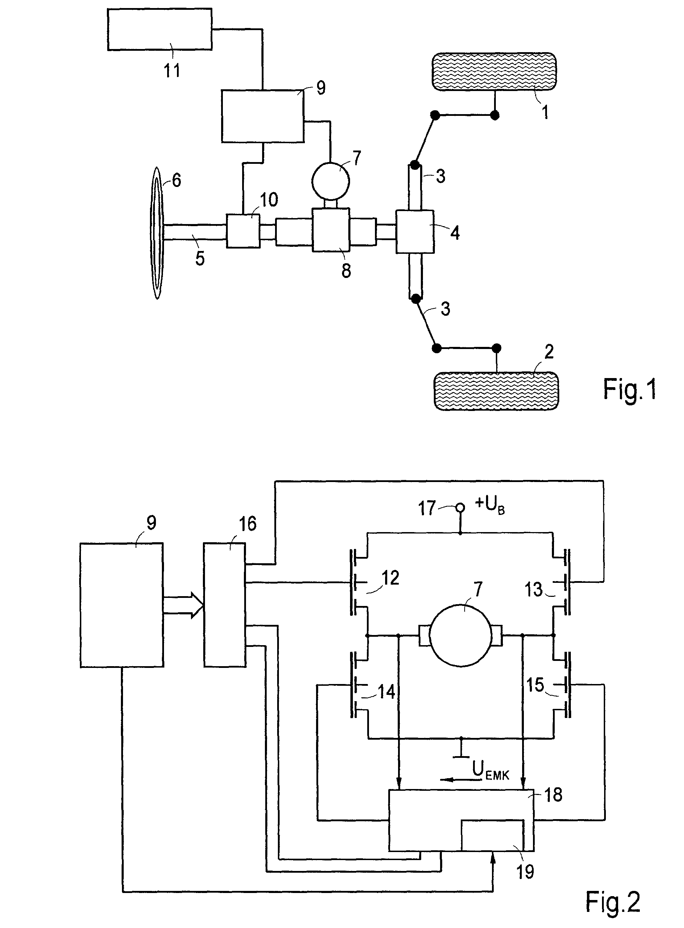

Fig. 1 stellt schematisch die Lenkeinrichtung eines Kraftfahrzeugs dar mit Vorderrädern 1, 2, einem Lenkgestänge 3, einem Lenkgetriebe 4, einer Lenkwelle 5 und einem Lenkrad 6. Als Servo-Lenkung bzw. Lenkhilfe ist ein Elektromotor 7 vorgesehen, dessen Abtrieb über ein Schneckengetriebe 8 mit der Lenkwelle 5 verbunden ist und der von einer Steuerschaltung 9 und einem Drehmomentsensor 10 derart gesteuert wird, dass er den mit Hilfe des Lenkrades 6 gemachten Vorgaben möglichst genau folgt. Zusätzlich erhält die Steuerschaltung 9 vom Bordnetz 11 Signale, die den Betriebszustand des Kraftfahrzeugs beschreiben soweit er für die Servo-Lenkung relevant ist.

Bei üblichen Fahrzeuglenkungen beträgt das Übersetzungsverhältnis zwischen dem Radwinkel (Lenkwinkel) und dem Lenkradwinkel etwa 1:17 und zwischen dem Radwinkel und dem Motorwinkel etwa 1:300. Dadurch wird der Elektromotor 7 auf eine relativ hohe Drehzahl beschleunigt, wenn die Vorderräder 1, 2, so schnell es per Hand geht, an den Anschlag gefahren werden.

Durch die erfindungsgemäße Schutzeinrichtung wird nun der Elektromotor 7 abgebremst, wenn er über eine vorgegebene Drehzahl gerät, sodass die Vorderräder 1, 2 nicht mit so hoher Geschwindigkeit an den Anschlag geschwenkt werden können.

Bei dem Ausführungsbeispiel nach Fig. 2 ist zum Betrieb des Elektromotors 7 eine Brückenendstufe aus Feldeffekttransistoren 12, 13, 14, 15 vorgesehen, die von einer Treiberschaltung 16 in an sich bekannter Weise angesteuert wird. Bei 17 wird der Brückenendstufe die Batteriespannung U_{B} zugeführt, während der andere Anschluss der Brückenendstufe mit Masse verbunden ist. Wird der Elektromotor 7 mechanisch durch Schwenken der Räder angetrieben, arbeitet er als Generator, sodass an seinen Anschlüssen eine Spannung U_{EMK} entsteht. Diese wird den Eingängen einer Bremsschaltung 18 zugeführt, welche ausgangsseitig in die Steuerleitungen zwischen der Treiberschaltung 16 und den Steuer-Elektroden der Feldeffekttransistoren 14 und 15 eingeschaltet ist.

Sobald U_{EMK} einen vorgegebenen Wert überschreitet, was der Überschreitung einer vorgegebenen Drehzahl entspricht, werden die Feldeffekttransistoren 14 und 15 in den leitenden Zustand geschaltet und belasten somit den Elektromotor 7, der dann praktisch nicht mehr schneller gedreht werden kann. Ein Teil 19 der Bremsschaltung 18 dient zum Abschalten der Bremsschaltung 18 beim Betrieb des Fahrzeugs und wird von der Steuerschaltung 9 gesteuert.

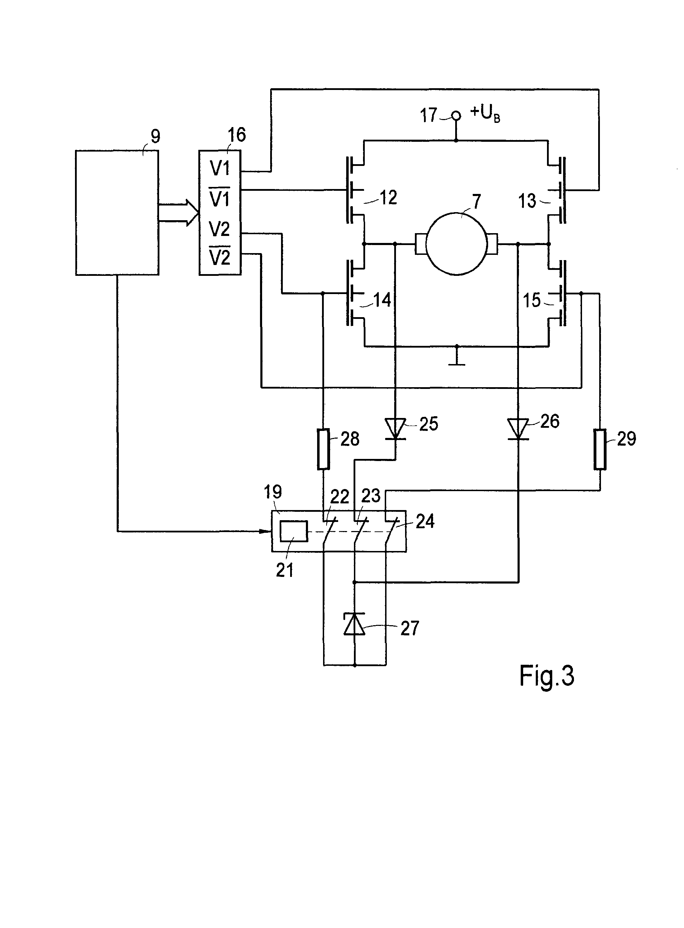

Fig. 3 zeigt in gleicher Weise wie Fig. 2 die Steuerschaltung 9, die Treiberschaltung 16, den Elektromotor 7 und die Brückenendstufe 12 bis 15. Die Bremsschaltung ist jedoch detaillierter dargestellt. Dabei wird die Abschalteinrichtung von einem Relais 19 mit einer Spule 21 und drei Kontaktpaaren 22, 23, 24 gebildet. Das Relais 19 ist in einem Zustand dargestellt, bei welchem die Servo-Lenkung ausgeschaltet und die erfindungsgemäße Schutzeinrichtung aktiviert ist.

Jeweils ein Anschluss des Elektromotors 7 ist über eine Diode 25, 26 mit einem Pol einer Z-Diode 27 verbunden, was im Falle der Diode 25 über das Kontaktpaar 23 erfolgt. Der andere Pol der Z-Diode 27 ist über jeweils ein weiteres Kontaktpaar 22, 24 des Relais 21 und über je einen Widerstand 28, 29 mit den Steuerelektroden der Feldeffekttransistoren 14, 15 verbunden. Dabei dienen die Widerstände 28 und 29 zur Begrenzung des Gate-Stroms der Feldeffekttransistoren 14, 15.

Je nach Drehrichtung des Elektromotors 7 wird eine der Dioden 25, 26 leitend und führt der Z-Diode 27 positive Spannung zu, die jedoch erst oberhalb der Durchbruchspannung der Z-Diode 27 zu einem Leitendwerden der Feldeffekttransistoren 14, 15 führt. Dann setzt der bereits beschriebene Bremsvorgang ein.

## Patentansprüche

1. Schutzeinrichtung für eine elektrische Lenkung eines Kraftfahrzeugs mit einer Bedieneinrichtung, einem Elektromotor, einer Steuerschaltung und einem Getriebe, **dadurch gekennzeichnet, dass** der Elektromotor (7) mit einer Bremsschaltung (18) verbunden ist, die den Motor mit einer elektrischen Last (14, 15) beaufschlagt, wenn die Drehzahl einen vorgegebenen Wert übersteigt.

2. Schutzeinrichtung nach Anspruch 1, **dadurch gekennzeichnet, dass** die Bremsschaltung (18) von der Steuerschaltung (9) während des Betriebs des Kraftfahrzeugs abgeschaltet wird.

3. Schutzeinrichtung nach einem der Ansprüche 1 oder 2, **dadurch gekennzeichnet, dass** die Bremsschaltung (18) von einer eingangsseitig mit den Anschlüssen des Elektromotors verbundenen Schwellwertschaltung (25, 26, 27) und mindestens einem von der Schwellwertschaltung ansteuerbaren Halbleiterschalter (14, 15) einer im übrigen zum Antrieb dienenden Endstufe gebildet ist.

4. Schutzeinrichtung nach Anspruch 3, **dadurch gekennzeichnet, dass** die Last von mindestens zwei Halbleiterschaltern (14, 15) einer Brückenendstufe gebildet ist.

5. Schutzeinrichtung nach Anspruch 4, **dadurch gekennzeichnet, dass** die Schwellwertschaltung aus zwei mit je einem Anschluss des Elektromotors verbundenen Dioden (25, 26) besteht, die gemeinsam an einen Pol einer Z-Diode (27) angeschlossen sind, und dass der andere Pol der Z-Diode (27) mit Steuereingängen der Halbleiterschalter 14, 15) verbunden ist.

6. Schutzeinrichtung nach einem der vorhergehenden Ansprüche, **dadurch gekennzeichnet, dass** in Zuleitungen der Schwellwertschaltung (25, 26, 27) zu den Steuerelektroden von der Steuerschaltung (9) steuerbare Schalter (22, 24) angeordnet sind.

7. Schutzeinrichtung nach Anspruch 6, **dadurch gekennzeichnet, dass** ein weiterer steuerbarer Schalter (23) zwischen mindestens einer der Dioden (25) und der Z-Diode (27) angeordnet ist.

8. Schutzeinrichtung nach einem der Ansprüche 6 oder 7, **dadurch gekennzeichnet, dass** die steuerbaren Schalter von einem Relais (19, 22, 23, 24) gebildet sind.
